# EUROPÄISCHE PATENTSCHRIFT

(11) **EP 2 483 137 B1**
(45) Veröffentlichungstag und Bekanntmachung des Hinweises auf die Patenterteilung: **04.12.2013**
(21) Anmeldenummer: 10759821.1
(22) Anmeldetag: 22.09.2010
(51) Int. Cl.: B62D 25/14, B62D 29/00, B62D 41/00, B60R 21/0136

(54) **HYBRIDBAUTEIL SOWIE VERFAHREN ZUM HERSTELLEN EINES HYBRIDBAUTEILS**
HYBRID COMPONENT AND METHOD FOR MANUFACTURING A HYBRID COMPONENT
COMPOSANT HYBRIDE ET PROCEDE DE PRODUCTION D'UN COMPOSANT HYBRIDE

(30) Priorität: 02.10.2009 DE 102009048185
(43) Veröffentlichungstag der Anmeldung: 08.08.2012
(73) Patentinhaber: Daimler AG, 70327 Stuttgart (DE)
(72) Erfinder: KROPLA, Oliver, 21224 Rosengarten (DE)
(74) Vertreter: JENSEN & SON
(86) Internationale Anmeldenummer: PCT/EP2010/005798
(87) Internationale Veröffentlichungsnummer: WO 2011/038853

(56) Entgegenhaltungen:
- EP-A1- 1 844 989
- AT-U1- 9 699
- DE-A1- 10 120 138
- DE-A1-102004 025 245
- DE-C1- 10 145 357

## Beschreibung

Die Erfindung betrifft ein Hybridbauteil nach dem Oberbegriff von Patentanspruch 1 sowie ein Verfahren zum Herstellen eines solchen Hybridbauteils nach dem Oberbegriff von Patentanspruch 10. Beispielsweise beschreibt die AT 9 699 U1 ein solches Hybridbauteil.

Gattungsgemäße Bauteile für eine Karosserie eines Personenkraftwagens sind hinlänglich bekannt. Sie sind insbesondere als Kunststoff-Metall-Hybridbauteile oder aus einem faserverstärkten Kunststoff ausgebildet und übernehmen wichtige Tragfunktionen in dem Personenkraftwagen. Im Fahrbetrieb des Personenkraftwagens wird ein derartiges Bauteil ständig wechselnden Belastungen ausgesetzt, welche zu elastischen Verformungen des Bauteils führen. Überhöhte Belastungen beispielsweise bei einem Unfall oder durch eine fortgeschrittene Alterung nach Ende der Lebensdauer des Bauteils können beispielsweise zu einer dauerhaften Verformung oder zu einer Funktionsbeeinträchtigung des Bauteils führen.

Bei einer Untersuchung des Personenkraftwagens sind derartige Schäden nicht ohne weiteres zu erkennen. Zudem sind beispielsweise als Strukturbauteile der Karosserie eingesetzte Hybridbauteile, wenn überhaupt, erst nach Ausbau ganzer Systeme zugänglich, was zu hohen Kosten in einem Service- bzw. Reparaturfall führt.

Es ist daher Aufgabe der vorliegenden Erfindung, ein Hybridbauteil sowie ein Verfahren zur Herstellung eines Hybridbauteils der eingangs genannten Art derart weiter zu entwickeln, dass eine entsprechende Verformung des Hybridbauteils auf einfache Art und Weise erfasst werden kann.

Diese Aufgabe wird durch ein Hybridbauteil mit den Merkmalen des Patentanspruchs 1 sowie durch ein Verfahren zum Herstellen eines Hybridbauteils mit den Merkmalen des Patentanspruchs 10 gelöst. Vorteilhafte Ausgestaltungen mit zweckmäßigen und nichttrivialen Weiterbildungen der Erfindung sind in den abhängigen Ansprüchen angeben.

Ein solches Hybridbauteil, insbesondere ein Trägerbauteil, für einen Kraftwagen, mit zumindest einem Grundbauteil aus einem metallischen Werkstoff, welches zumindest bereichsweise mit einem Kunststoff versehen ist, weist erfindungsgemäß eine Erfassungseinrichtung mit zumindest einem Leiterelement auf, mittels welchem eine entsprechende Verformung des Hybridbauteils erfassbar ist. Eine derartige Verformung kann dabei eine plastische oder aber auch ein elastische Verformung des Hybridbauteils sein. Durch das Vorsehen wenigstens eines derartigen Leiterelements ist es auf kostengünstige Weise erreicht, dass bei einem Service oder gar im Fahrbetrieb des Kraftwagens eine Verformung oder Beschädigung erkennbar ist, ohne dass das Hybridbauteil oder eine betreffende Komponente, welche das Hybridbauteil umfasst, ausgebaut werden muss. Dies bedeutet eine erhebliche Kostenreduzierung in besagtem Servicefall, da ein Ausbau nur tatsächlich dann durchgeführt werden muss, wenn eine tatsächliche Beschädigung und/oder Verformung und damit eine Herabsetzung einer Funktionserfüllung des Hybridbauteils vorliegt und erfasst wurde. Eine derartige Verformung bzw. Beschädigung kann dabei auch in Folge eines fortgeschrittenen Alters des Hybridbauteils auftreten, was ebenso durch das erfindungsgemäße Hybridbauteil mit der Erfassungseinrichtung erfassbar ist.

Vorteilhafter Weise ist das zumindest eine Leiterelement an besonders kritischen bzw. hoch belasteten Stellen des Hybridbauteils angeordnet, die beispielsweise in einem Testbetrieb oder durch rechnergestützte Simulationen ermittelbar sind.

Eine Reaktion des Leiterelements auf die Verformung bzw. Beschädigung des Hybridbauteils kann dabei aktiv oder passiv erfolgen. Bei einer aktiven Reaktion kann beispielsweise ein Signal durch die Erfassungseinrichtung ausgegeben werden, welches im Innenraum bzw. Cockpit des Kraftwagens angezeigt wird. Bei einer passiven Reaktion kann beispielsweise erst bei einer Serviceanwendung, beispielsweise in einer Werkstatt und bei einem Auslesen eines Fehlerspeichers, die Beschädigung bzw. die Verformung des Hybridbauteils ausgelesen und beispielsweise auf einem Servicegerät angezeigt werden.

Grundsätzlich hat das Hybridbauteil den Vorteil, dass dieses einerseits sehr leicht und steif ist und andererseits viele zusätzliche Funktionen erfüllen kann, indem durch den Kunststoff entsprechende Halter, Aufnahmen, Befestigungsstellen oder dgl. gebildet sind. Besonders die Erfassung einer Beschädigung oder einer Verformung ist daher besonders vorteilbehaftet, da ein Ausfall eines derartigen Bauteils kostenintensive und gegebenenfalls sicherheitsrelevante Folgeschäden mit sich führen kann.

Bei einer vorteilhaften Ausführungsform der Erfindung ist das Leiterelement als elektrischer Leiter ausgebildet, wodurch eine kostengünstige aber gleichzeitig effiziente Erfassung einer eventuellen Beschädigung des Hybridbauteils möglich ist.

Ist das Leiterelement als optischer Leiter ausgebildet, so hat diese Ausführungsform den Vorteil, dass eine Beschädigung bzw. eine Verformung schnell und exakt erfassbar ist.

Somit ist eine Verformung und/oder eine Beschädigung des Hybridbauteils beispielsweise durch ein Reißen und/oder durch einen Bruch und/oder durch eine Änderung eines elektrischen bzw. optischen Übertragungsverhaltens des Leiterelements detektierbar. Vorteilhafter Weise ist der elektrische Leiter durch das Grundbauteil des Hybridbauteils selbst ausgebildet. Dies bedeutet, dass das im Wesentlichen metallische Grundbauteil selbst als Leiterelement, beispielsweise als Masse-Leiter, ausgebildet ist, dessen Verformung bzw. Beschädigung eine Änderung seines elektrischen Verhaltens bedeutet, was somit erfassbar ist. Zur Herstellung der elektrischen Leitfähigkeit sind bei der Ausbildung des Grundbauteils im Wesentlichen aus Aluminium entsprechende Vorkehrungen zu treffen, so dass eine passivierende Oxidschicht des Aluminiums entsprechend dauerhaft abgetragen, aufgebrochen oder dgl. entfernt ist. Diese Ausführungsform birgt dabei den Vorteil, dass die Teileanzahl des Hybridbauteils in Folge einer Vermeidung von zusätzlichen Leiterelementen reduziert ist, was mit geringeren Gesamtkosten des Hybridbauteils und mit einem geringeren Gewicht desselbigen einher geht.

Ist der Kunststoff des Hybridbauteils im Wesentlichen als ein faserverstärkter Kunststoff ausgebildet, so birgt dies den Vorteil, dass somit ein äußerst steifes und leichtes Hybridbauteil geschaffen ist, welches in Folge einer bestimmten Faserausrichtung bzw. einer Ausrichtung mehrerer Faserlagen zueinander bedarfsgerecht zur Erfüllung bestimmter Aufgabe ausbildbar ist.

Bei einer vorteilhaften Ausführungsform der Erfindung ist vorgesehen, dass das Leiterelement auf der Oberfläche des Kunststoffs des Hybridbauteils angeordnet ist. Somit kann das Hybridbauteil selbst nach dessen Herstellung in unkomplizierter und damit kostengünstiger Weise mit dem Leiterelement zur Erschaffung der Erfassungseinrichtung versehen werden, wodurch die Gesamtkosten für das Hybridbauteil in einem geringen Rahmen gehalten werden können. Auch bei dieser Ausführungsform ist insbesondere in Folge des Brechen und/oder des Reißens des Leiterelements eine einfache digitale 0-1-Auswertung ermöglicht. Diese Erfassung kann dabei durch einen Vergleich eines Soll-Widerstands mit einem Ist-Widerstand des Leiterelements oder eines optischen Soll-Übertragungsverhaltens mit einem optischen Ist-Übertragungsverhalten geschehen.

Das Leiterelement kann als ein Draht oder als eine Folie ausgebildet und auf den Kunststoff des Hybridbauteils und/oder an dem Grundbauteil zumindest bereichsweise angeordnet, beispielsweise aufgeklebt, sein, wodurch das Leiterelement kostengünstig an besagten hoch belasteten bzw. kritischen Stellen des Hybridbauteils positionierbar ist

Ist das Leiterelement zumindest bereichsweise durch den Kunststoff aufgenommen, so birgt dies den Vorteil, dass dadurch das Leiterelement mit dem Hybridbauteil besonders fest verbunden ist, wodurch eine Gefahr des Ablösens des Leiterelements vom Hybridbauteil reduziert ist.

Eine weitere besonders vorteilhafte Ausführungsform der Erfindung sieht vor, dass das Leiterelement zumindest bereichsweise in Fasern des Hybridbauteils integriert, insbesondere eingewoben oder dgl. eingearbeitet, ist. Dies bedeutet zum einen wiederum eine besonders feste Verbindung des Leiterelements mit dem Hybridbauteil und zum anderen ist dadurch eine Verbindung des Leiterelements mit dem Hybridbauteil ohne zusätzliche Befestigungsmittel geschaffen.

Ist eine Mehrzahl von Leiterelementen vorgesehen, welche in einer tabellenartigen Matrixanordnung angeordnet sind, so ist dies insofern vorteilbehaftet, als dadurch eine genaue Position des Schadens bestimmbar ist. Dadurch ist es zum Einen ermöglicht, dass das beschädigte Hybridbauteil gezielt und damit kostengünstig austauschbar ist, und zum Anderen sind dadurch Rückschlüsse auf eine Belastung des Hybridbauteils ermöglicht, welche beispielsweise in eine weitere Entwicklung des Hybridbauteils zur Vermeidung von Folgeschäden einknüpfbar sind.

Zur Erfindung gehört auch ein Verfahren zum Herstellen eines Hybridbauteils, insbesondere eines Trägerbauteils, für einen Kraftwagen, bei welchem zumindest ein Grundbauteil aus einem metallischen Werkstoff zumindest bereichsweise mit einem Kunststoff versehen wird, wobei erfindungsgemäß vorgesehen ist, dass das Hybridbauteil mit einer Erfassungseinrichtung mit zumindest einem Leiterelement versehen wird, durch welches eine Verformung des Hybridbauteils erfassbar ist. Wie bereits in Zusammenhang mit dem Hybridbauteil beschrieben, ist es durch das erfindungsgemäße Verfahren auf einfache und damit kostengünstige Art und Weise möglich, eine Verformung bzw. Beschädigung des Hybridbauteils zu erfassen.

Als Leiterelement kann dabei ein elektrischer Leiter und/oder ein optischer Leiter vorgesehen werden, da diese eine hohe Präzision und Zuverlässigkeit aufweisen sowie ein schnelles Ansprechverhalten der Erfassungseinrichtung begünstigten.

Wird das Leiterelement zumindest bereichsweise auf einer Oberfläche des Kunststoffs des Hybridbauteils und/oder an dem Grundbauteil angeordnet, und wird das Leiterelement durch ein Dreidimensionale-Spritzgegossene-Schaltungsträger-Verfahren, ausgebildet, so birgt dies den Vorteil, dass dadurch komplexe Geometrien des Leiterelements, besonders in Form des elektrischen Leiters, gestaltbar sind, der somit nahezu an beliebigen Stellen des Hybridbauteils zur Erfassung der Beschädigung bzw. zur Erfassung der Verformung desselbigen platzierbar ist. An dieser Stelle sei angemerkt, dass das erwähnte Dreidimensionale-Spritzgegossene-Schaltungsträger-Verfahren auch als 3D-Molded-Interconnect-Devices-Verfahren (3D-MID) bezeichnet wird.

Bei einer vorteilhaften Ausführungsform der Erfindung ist vorgesehen, dass das Leiterelement durch ein Laser-Direkt-Strukturierungsverfahren ausgebildet wird. Auch dadurch ist eine mannigfaltige Gestaltbarkeit des Leiterelements an hochbelasteten und damit kritischen Stellen des Hybridbauteils geschaffen, bei gleichzeitiger kostengünstiger Ausführbarkeit des Verfahrens, was damit auch niedrige Gesamtkosten für das Hybridbauteil bzw. für das Verfahren zum Herstellen des Hybridbauteils bedeutet.

Ebenso kann vorgesehen sein, dass das Leiterelement durch ein Prägeverfahren und/oder durch ein Zwei-Komponenten-Spritzgussverfahren ausgebildet wird, wodurch ebenfalls vielfältige Geometrien auf kostengünstige Art und Weise ausbildbar sind.

Wird das Leiterelement durch ein Aufspritzen einer Leiterbahn aus leitfähigem Pulver ausgebildet, so kann dies beispielsweise durch ein Flammspritzverfahren und/oder durch ein Kaltgasspritzverfahren durchgeführt werden. Dadurch kann das Leiterelement beispielsweise auf den bereits bestehenden Kunststoff des Hybridbauteils in nahezu beliebiger Form kostengünstig aufgebracht werden.

Wird der Kunststoff des Hybridbauteils im Wesentlichen als ein faserverstärkter Kunststoff gebildet, so kann vorteilhafter Weise vorgesehen sein, dass das Leiterelement zumindest bereichsweise in Fasern des Kunststoffs integriert, insbesondere eingewoben oder dgl. eingearbeitet wird, womit der in diesem Zusammenhang bereits beschriebene Vorteil einer festen Verbindung des Leiterelements mit dem Hybridbauteil realisiert ist.

Dabei kann vorgesehen sein, dass das Grundbauteil mit einem Faserteil, in welchen das Leiterelement integriert, insbesondere eingewoben oder dgl. eingearbeitet, in ein Spritzgusswerkzeug eingelegt und zumindest bereichsweise mit Kunststoff umspritzt wird. Dies trägt beispielsweise zur Erhöhung der Steifigkeit des Hybridbauteils und/oder zur Erhöhung des Funktionserfüllungsumfangs bei, da durch den anschließenden Spritzgussprozess durch den Kunststoff beispielsweise Befestigungselemente zur Anbringung anderweitiger Bauteile ausgebildet werden können. Durch diesen anschließenden Verfahrensschritt ist ein kostengünstiges und schnelles Verfahren geschaffen, mittels welchem eine leichte und gleichzeitig steife Strukturkomponente in Form des Hybridbauteils geschaffen wird, welches viele Funktionen erfüllen kann.

Bei dem Faserteil kann es sich beispielsweise um eine Fasermatte handeln, in welche das Leiterelement eingewoben und anschließend mit dem Grundbauteil in das Spritzgusswerkzeug eingelegt und mit Kunststoff umspritzt wird. Ebenso möglich ist der Einsatz eines Faserkörpers, welcher im Wesentlichen eine Faserstruktur aufweist, die einen Körper bildet, beispielsweise einen Faserschlauch, in welchen bei dessen Herstellung das Leiterelement eingewoben bzw. integriert wird. Anschließend wird das Grundbauteil mit diesem Faserkörper versehen und in das Spritzgusswerkzeug zum Umspritzen mit Kunststoff eingelegt.

Bei dem oben genannten Grundbauteil handelt es sich beispielsweise um ein innenhochdruckumgeformtes Bauteil bzw. Rohr. Dementsprechend erweist es sich als vorteilbehaftet, wenn das Grundbauteil durch ein Innenhochdruckumformprozess bearbeitet und anschließend in einem Spritzgussverfahren mit Kunststoff umspritzt wird, wobei der Innenhochdruckumformprozess und das Spritzgussverfahren vorteilhafter Weise in ein und demselben Werkzeug durchgeführt wird.

Durch die verschiedenen Ausführungsformen der Erfindung und/oder durch Kombinationen der Ausführungsformen der Erfindung ist ein Hybridbauteil auf kostengünstige Weise geschaffen, welches ein Structural Health Monitoring (SHM) ermöglicht. Dies bedeutet, dass eine Überwachung eines strukturellen Zustands des Hybridbauteils ermöglicht ist. Wie beschrieben ist eine Herstellung des Hybridbauteils und eine Integration von Sensoren in Form zumindest eines elektrischen bzw. optischen Leiters kostengünstig oder gar kostenneutral durchführbar. Zudem ist eine einfache Kontaktierung an ein Diagnosesystem eines Personenkraftwagens ermöglicht, wodurch eine Beschädigung bzw. Verformung des Hybridbauteils offline, das heißt als beschriebene, passive Reaktion in einem Servicefall und/oder online, das heißt als aktive Reaktion in Diagnosesystem des Personenkraftwagens geschehen kann.

Zudem ist eine einfache Auswertung von Sensorsignalen des Leiterelements ermöglicht. Dabei müssen keine komplizierte Berechnung, keine Kalibrierung und kein Bezug auf Produktionsdaten erfolgen. Die beschriebene Erfassungseinrichtung ist unabhängig von Fahrzeug- und Bauteilvarianten, von Bauteilformen oder dgl. einsetzbar, was ohne großen Aufwand eine hohe Stückzahl und damit geringe Kosten ermöglich.

Zudem sei an dieser Stelle angemerkt, dass es sich bei einem derartigen Hybridbauteil beispielsweise um eine Strukturkomponente in Form eines Querträgers, insbesondere für ein Frontmodul eines Personenkraftwagens, handeln kann. Der Querträger kann auch ein Cockpit-Querträger sein oder Teil der Rückwand, Tür usw. sein.

Das erfindungsgemäße Hybridbauteil überwacht quasi aktiv seinen Zustand und bei Abweichung von einem Soll-Zustand, beispielsweise infolge einer Beschädigung durch zu hohe Belastung, meldet es dies in Form eines Signals. Derartige Abweichungen, denen auch anderweitige Änderungen der Steifigkeit zugrunde liegen können, geben eindeutige Rückschlüsse auf die Qualität des Bauteils und damit auf das Crashverhalten. Die von dem Hybridbauteil ausgesendeten Signale werden erfasst, gespeichert und ausgewertet, woraufhin sie in einen späteren Weiterentwicklungsprozess des Hybridbauteils vorteilhaft einfließen können. Beispielsweise kann dahingehend die lokale Häufigkeit von Beschädigungen registriert und bei einer Neugestaltung des Bauteils auf diesen Sachverhalt entsprechend ausgelegt werden. Zudem können die Signale Anlass dafür geben, das Bauteil auszutauschen oder zu reparieren. In gleicher Weise ermöglichen die beschriebenen Sensoren einen Übergang zu aktiven Bauteilen, bei welchen das Wirkprinzip der Sensoren umgekehrt werden kann, so dass diese auch bei Bedarf als Aktoren eingesetzt werden können. Hierzu sind allerdings nur bestimmte Sensoren, wie beispielsweise Piezo-Elemente einsatztauglich. Denkbar wäre auch der Einsatz eines Leiterelements als Heizelement, um das Bauteil zu erwärmen und beispielsweise dessen Elastizität zu erhöhen.

In diesem Zusammenhang ist es ebenso möglich, an Stelle oder zusätzlich zu dem zumindest einen optischen bzw. elektrischen Leiter piezo-elektrische Sensoren zur Erfassung einer Beschädigung oder Verformung des Hybridbauteils einzusetzen. Weitere Vorteile, Merkmale und Einzelheiten der Erfindung ergeben sich aus der nachfolgenden Beschreibung mehrerer bevorzugter Ausführungsbeispiele sowie anhand der Zeichnungen. Die vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegeben Kombination, sondern auch in anderen Kombinationen oder in Alleinstellung verwendbar, ohne den Rahmen der Erfindung zu verlassen.

Die Zeichnung zeigen in:
- Fig. 1: eine perspektivische Ansicht eines Kunststoff-Metall-Querträgers für einen Personenkraftwagen, bei welchem eine Erfassungseinrichtung zur Erfassung von Verformungen des Querträgers vorgesehen ist, welche einen elektrischen Leiter umfasst, der auf den Kunststoff aufgebracht ist und durch dessen Bruch, Reißen oder Änderung eines elektrischen Widerstands eine Verformung des Querträgers erfassbar ist,
- Fig. 2: abschnittsweise zwei vergrößerte perspektivische Ansichten einer hochbelasteten Stelle des Querträgers gemäß Fig. 1, an welcher ein elektrischer Leiter zur Erfassung der Verformung auf den Kunststoff aufgebracht ist,
- Fig. 3: eine schematische Querschnittsansicht eines Kunststoff-Metall-Querträgers, in dessen Kunststoff elektrische Leiter vorgesehen sind zur Erfassung einer Verformung des Querträgers,
- Fig. 4: eine schematische Querschnittsansicht eines Kunststoff-Metall-Querträgers, in dessen Kunststoff optische Leiter vorgesehen sind zur Erfassung einer Verformung des Querträgers und
- Fig. 5: eine schematische Ansicht einer tabellenartigen Matrixanordnung von elektrischen Leitern und/oder von optischen Leitern gemäß den Fig. 3 und 4 zur Erfassung und genauen Lokalisierung einer Verformung eines Querträgers gemäß den vorhergehenden Figuren.

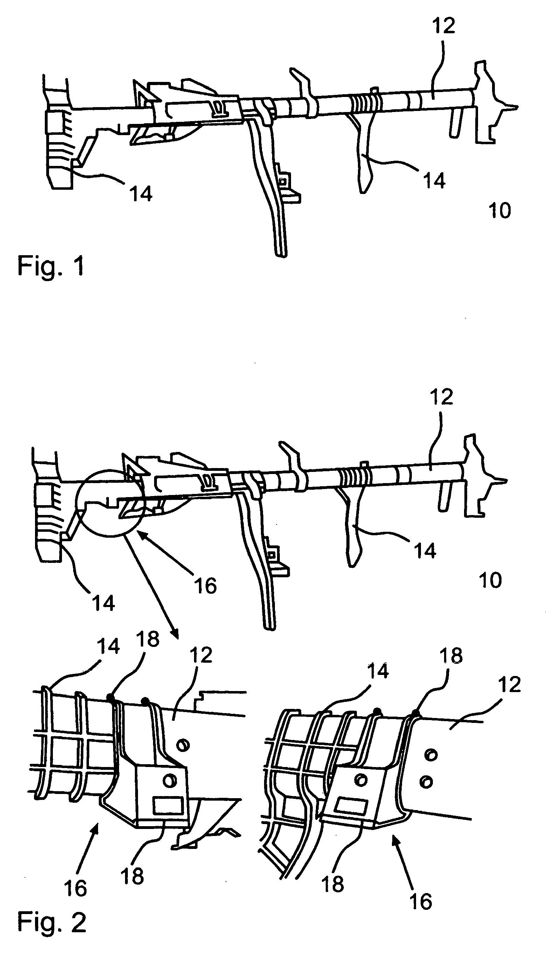

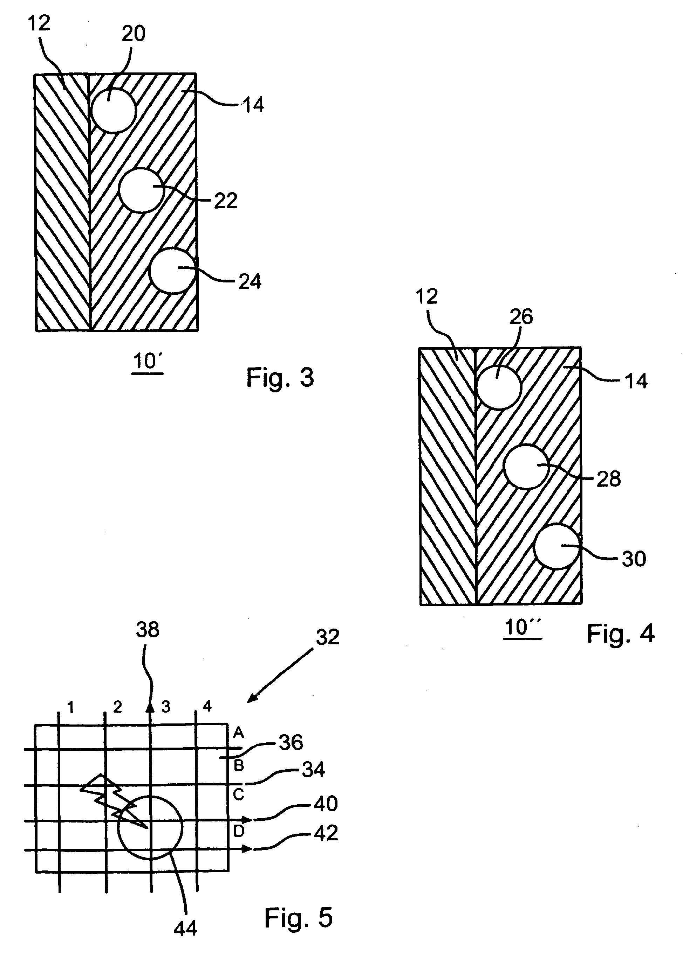

Während die Fig. 1 und 2 eine mögliche Ausführungsform einer Anordnung eines elektrischen Leiters an einem Kunststoff-Metall-Querträgers zur Erfassung einer Verformung bzw. einer Beschädigung des Querträgers darstellen, zeigen die Fig. 3 bis 5 Möglichkeiten auf, derartige elektrische Leiter und/oder optische Leiter zur Erfassung der Verformung bzw. der Beschädigung in den Kunststoff des Querträgers einzubringen bzw. matrixförmig zur Lokalisierung der Verformung bzw. der Beschädigung anzuordnen.

In den Figuren bezeichnen gleiche Bezugszeichen gleiche Elemente.

Die Fig. 1 zeigt ein Kunststoff-Metall-Hybridbauteil in Form eines Querträgers 10 für einen Kraftwagen, welcher ein aus einem metallischen Werkstoff gebildetes Grundbauteil 12 umfasst, das bereichsweise durch einen Kunststoff 14 zu besagtem Kunststoff-Metall-Hybridbauteil ergänzt ist. Der Querträger 10 übernimmt dabei Aufgaben einer Versteifung des Personenkraftwagens sowie eine Aufnahme von in seinem Bereich angeordneten Bauteilen.

Da eine Verformung oder aber eine Beschädigung des Querträgers 10 mitunter auch sicherheitsrelevante Aspekte des Personenkraftwagen beeinflussen könnte, ist eine Erfassung derartiger Verformungen bzw. Beschädigungen beispielsweise in Folge einer unfallbedingten Kraftbeaufschlagung oder einer fortgeschrittenen Alterung wünschenswert, ohne dabei den Querträger 10 aus dem Personenkraftwagen ausbauen zu müssen, was Kosten verursachen würde.

Daher ist, wie Fig. 2 darstellt, auf den Kunststoff 14 des Querträgers 10 in einem hoch belasteten Bereich 16 des Querträgers 10 eine Erfassungseinrichtung 17 mit einem elektrischen Leiter 18 aufgebracht. In Folge einer überhöhten Verformung bzw. einer Beschädigung eines Querträgers 10 reißt bzw. bricht der elektrische Leiter 18 oder verändert zumindest seinen elektrischen Widerstand, wodurch eine derartige überhöhte Verformung bzw. Beschädigung des Querträgers 10 erfassbar ist.

Die Fig. 3 zeigt ein Kunststoff-Metall-Hybridbauteil in Form eines Querträgers 10', welcher wie der Querträger 10 gemäß Fig. 1 das im Wesentlichen aus einem metallischen Werkstoff gebildetes Grundbauteil 12 umfasst, dass durch den Kunststoff 14 zu besagtem Kunststoff-Metall-Hybridbauteil ergänzt ist. Zur Erfassung einer Verformung bzw. einer Beschädigung des Querträgers 10' ist nun eine Erfassungseinrichtung mit einer Mehrzahl von elektrischen Leitern 20, 22, 24 vorgesehen, welche in den Kunststoff 14 des Querträgers 10' eingebracht, also sozusagen eingebettet, sind.

Die Fig. 4 zeigt eine weitere, zu den vorhergehenden Querträgern 10 bzw. 10' alternative Ausführungsform eines Querträgers 10", welcher ebenso das im Wesentlichen aus einem metallischen Werkstoff gebildetes Grundbauteil 12 umfasst, das mit dem Kunststoff 14 zu einem Kunststoff-Hybridbauteil ergänzt ist. In dem Kunststoff 14 des Querträgers 10" ist nun eine Mehrzahl von optischen Leitern 26, 28 und 30 einer Erfassungseinrichtung eingebracht, durch deren Reißen und/oder Brechen und/oder Änderung eines optischen Übertragungsverhaltens eine Verformung bzw. eine Beschädigung des Querträgers 10" erfassbar ist. Bei den optischen Leitern 26, 28 und 30 handelt es sich dabei um so genannte faseroptische Sensoren.

Die Fig. 5 zeigt eine tabellenartige Matrixanordnung 32 einer Erfassungseinrichtung, die beispielsweise die zuvor genannten elektrischen Leiter 18, 20, 22, 24 und/oder optischen Leiter 26, 28, 30 umfasst. Eine so gebildete Sensormatrix 34 ist dabei auf eine Kunststoff-Metall-Hybridkomponente 36, also beispielsweise auf einen Querträger 10 bzw. 10', 10" der vorhergehenden Figuren, aufgebracht, welche eine genaue Lokalisierung eines Schadens der Kunststoff-Metall-Hybridkomponente 36 erlaubt, was gemäß Richtungspfeilen 38, 40 und 42 und einem Kreis 44 angedeutet ist.

Durch die in den Fig. dargestellten Ausführungsformen ist eine Überwachungsmöglichkeit eines strukturellen Zustands (Structural Health Monitoring) der entsprechenden Bauteile möglich, die einen Ausbau des Bauteils aus einem Gesamtsystem lediglich auf Verdacht oder lediglich zur Überprüfung vermeidet. Somit ist ein Kosten verursachender Ausbau nur im tatsächlichen Falle einer Beschädigung einer Verformung des jeweiligen Bauteils von Nöten.

## Patentansprüche

1. Hybridbauteil (10, 10', 10"), insbesondere Trägerbauteil (10, 10', 10"), für einen Kraftwagen, mit zumindest einem Grundbauteil (12) aus einem metallischen Werkstoff, welches zumindest bereichsweise mit einem Kunststoff (14) versehen ist,
**dadurch gekennzeichnet, dass**
das Hybridbauteil (10, 10', 10") eine Erfassungseinrichtung mit zumindest einem Leiterelement (18, 20, 22, 24, 26,28, 30) umfasst, mittels welchem eine Verformung des Hybridbauteils (10, 10', 10") erfassbar ist.

2. Hybridbauteil (10, 10', 10") nach Anspruch 1,
**dadurch gekennzeichnet, dass**
das Leiterelement als elektrischer Leiter (18, 20, 22, 24) ausgebildet ist.

3. Hybridbauteil (10, 10', 10") nach Anspruch 2,
**dadurch gekennzeichnet, dass**
der elektrische Leiter (18, 20, 22, 24) durch das Grundbauteil (12) des Hybridbauteils (10, 10', 10") selbst ausgebildet ist.

4. Hybridbauteil (10, 10', 10") nach einem der vorhergehenden Ansprüche,
**dadurch gekennzeichnet, dass**
das Leiterelement als optischer Leiter (26, 28, 30) ausgebildet ist.

5. Hybridbauteil (10, 10', 10") nach einem der vorhergehenden Ansprüche,
**dadurch gekennzeichnet, dass**
der Kunststoff (14) im Wesentlichen als ein faserverstärkter Kunststoff ausgebildet ist, wobei vorzugsweise das Leiterelement (18, 20, 22, 24, 26,28, 30) zumindest bereichsweise in Fasern des Kunststoffs (14) integriert, insbesondere eingewoben oder dgl. eingearbeitet, ist.

6. Hybridbauteil (10, 10', 10") nach einem der vorhergehenden Ansprüche,
**dadurch gekennzeichnet, dass**
das Leiterelement (18, 20, 22, 24, 26,28, 30) zumindest bereichsweise auf dem Kunststoff (14) des Hybridbauteils (10, 10', 10") angeordnet oder zumindest bereichsweise durch den Kunststoff (14) des Hybridbauteils (10, 10', 10") aufgenommen ist.

7. Hybridbauteil (10, 10', 10") nach einem der vorhergehenden Ansprüche,
**dadurch gekennzeichnet, dass**
das Leiterelement (18, 20, 22, 24, 26,28, 30) als Draht oder Folie ausgebildet ist.

8. Hybridbauteil (10, 10', 10") nach einem der vorhergehenden Ansprüche,
**dadurch gekennzeichnet, dass** das Leiterelement (18, 20, 22, 24, 26,28, 30) zumindest bereichsweise an dem Grundbauteil (12) des Hybridbauteils (10, 10', 10") angeordnet ist.

9. Hybridbauteil (10, 10', 10") nach einem der vorhergehenden Ansprüche,
**dadurch gekennzeichnet, dass**
eine Mehrzahl von Leiterelementen (18, 20, 22, 24, 26,28, 30) vorgesehen ist, welche in einer tabellenartigen Matrixanordnung (32) angeordnet sind.

10. Verfahren zum Herstellen eines Hybridbauteils (10, 10', 10"), insbesondere eines Trägerbauteils (10, 10', 10"), für einen Kraftwagen, bei welchem zumindest ein Grundbauteil (12) aus einem metallischen Werkstoff zumindest bereichsweise mit einem Kunststoff (14) versehen wird,
**dadurch gekennzeichnet, dass**
das Hybridbauteil (10, 10', 10") mit einer Erfassungseinrichtung mit zumindest einem Leiterelement (18, 20, 22, 24, 26,28, 30) versehen wird, durch welches eine Verformung des Hybridbauteils (10, 10', 10") erfasst wird.

## Claims

1. Hybrid component (10, 10', 10"), in particular structural member component (10, 10', 10"), for a motor vehicle, comprising at least one base component (12) of a metallic material, which is provided with a plastic material (14) in at least some regions,
**characterised in that**
the hybrid component (10, 10', 10") comprises a detecting device with at least one conductor element (18, 20, 22, 24, 26, 28, 30) by means of which a deformation of the hybrid component (10, 10', 10") can be detected.

2. Hybrid component (10, 10', 10") according to claim 1,
**characterised in that**
the conductor element is designed as an electric conductor (18, 20, 22, 24).

3. Hybrid component (10, 10', 10") according to claim 2,
**characterised in that**
the electric conductor (18, 20, 22, 24) is represented by the base component (12) of the hybrid component (10, 10', 10") itself.

4. Hybrid component (10, 10', 10") according to any of the preceding claims,
**characterised in that**
the conductor element is designed as an optical conductor (26, 28, 30).

5. Hybrid component (10, 10', 10") according to any of the preceding claims,
**characterised in that**
the plastic material (14) is substantially represented by a fibre-reinforced plastic, wherein the conductor element (18, 20, 22, 24, 26, 28, 30) is preferably integrated into, in particular woven into or worked into by similar means, fibres of the plastic material (14) in at least some regions.

6. Hybrid component (10, 10', 10") according to any of the preceding claims,
**characterised in that**
the conductor element (18, 20, 22, 24, 26, 28, 30) is placed on the plastic material (14) of the hybrid component (10, 10', 10") at least in some regions or is accommodated by the plastic material (14) of the hybrid component (10, 10', 10") at least in some regions.

7. Hybrid component (10, 10', 10") according to any of the preceding claims,
**characterised in that**
the conductor element (18, 20, 22, 24, 26, 28, 30) is designed as a wire or a foil.

8. Hybrid component (10, 10', 10") according to any of the preceding claims,
**characterised in that**
the conductor element (18, 20, 22, 24, 26, 28, 30) is located on the base component (12) of the hybrid component (10, 10', 10") at least in some regions.

9. Hybrid component (10, 10', 10") according to any of the preceding claims,
**characterised in that**
a plurality of conductor elements (18, 20, 22, 24, 26, 28, 30) arranged in a table-type matrix arrangement (32) is provided.

10. Method for producing a hybrid component (10, 10', 10"), in particular a structural member component (10, 10', 10"), for a motor vehicle, wherein at least one base component (12) of a metallic material is provided with a plastic material (14) in at least some regions,
**characterised in that**
the hybrid component (10, 10', 10") is provided with a detecting device with at least one conductor element (18, 20, 22, 24, 26, 28, 30) by means of which a deformation of the hybrid component (10, 10', 10") is detected.

## Revendications

1. Composant hybride (10, 10', 10"), en particulier un composant support (10, 10', 10") pour un véhicule automobile, comprenant au moins un composant de base (12) en un matériau métallique qui est pourvu au moins partiellement d'une matière plastique (14), **caractérisé en ce que** l'élément hybride (10, 10', 10") comprend un dispositif de détection ayant au moins un élément conducteur (18, 20, 22, 24, 26, 28, 30), au moyen duquel une déformation du composant hybride (10, 10', 10") peut être détectée.

2. Composant hybride (10, 10', 10") selon la revendication 1, **caractérisé en ce que** l'élément conducteur est conçu en tant que conducteur électrique (18, 20, 22, 24).

3. Composant hybride (10, 10', 10") selon la revendication 2, **caractérisé en ce que** le conducteur électrique (18, 20, 22, 24) est conçu lui-même par un composant de base (12) du composant hybride (10, 10', 10").

4. Composant hybride (10, 10', 10") selon l'une quelconque des revendications précédentes, **caractérisé en ce que** l'élément conducteur est conçu en tant que conducteur optique (26, 28, 30).

5. Composant hybride (10, 10', 10") selon l'une quelconque des revendications précédentes, **caractérisé en ce que** la matière plastique (14) est conçue essentiellement en tant que matière plastique renforcée par des fibres, de préférence l'élément conducteur (18, 20, 22, 24, 26, 28, 30) étant intégré, en particulier entrelacé ou incorporé au moins partiellement dans les fibres de la matière plastique (14).

6. Composant hybride (10, 10', 10") selon l'une quelconque des revendications précédentes, **caractérisé en ce que** l'élément conducteur (18, 20, 22, 24, 26, 28, 30) est disposé au moins partiellement sur la matière plastique (14) du composant hybride (10, 10', 10") ou est reçue au moins partiellement par la matière plastique (14) du composant hybride (10, 10', 10").

7. Composant hybride (10, 10', 10") selon l'une quelconque des revendications précédentes, **caractérisé en ce que** l'élément conducteur (18, 20, 22, 24, 26, 28, 30) est conçu en tant que fil ou film.

8. Composant hybride (10, 10', 10") selon l'une quelconque des revendications précédentes, **caractérisé en ce que** l'élément conducteur (18, 20, 22, 24, 26, 28, 30) est disposé au moins partiellement sur le composant de base (12) du composant hybride (10, 10', 10").

9. Composant hybride (10, 10', 10") selon l'une quelconque des revendications précédentes, **caractérisé en ce qu'**il est prévu une pluralité d'éléments conducteurs (18, 20, 22, 24, 26, 28, 30) qui sont disposés dans un agencement de matrice (32) en forme de tableau.

10. Procédé de fabrication d'un composant hybride (10, 10', 10"), en particulier un composant support (10, 10', 10") pour un véhicule automobile, comprenant au moins un composant de base (12) en un matériau métallique qui est pourvu au moins partiellement d'une matière plastique (14), **caractérisé en ce que** le composant hybride (10, 10', 10") est pourvu d'un dispositif de détection comprenant au moins un élément conducteur (18, 20, 22, 24, 26,28, 30) qui détecte une déformation du composant hybride (10, 10', 10").
